# EUROPEAN PATENT SPECIFICATION

(11) **EP 0 687 891 B1**
(45) Date of publication and mention of the grant of the patent: **06.05.1999**
(21) Application number: 95109107.3
(22) Date of filing: 13.06.1995
(51) Int. Cl.: G01C 9/34, G01C 9/06

(54) **Level detector**
Niveaudetektor
Détecteur de niveau

(30) Priority: 13.06.1994 JP 130513/94; 14.04.1995 JP 89638/95
(43) Date of publication of application: 20.12.1995
(73) Proprietor: Daishowa Seiki Co., Ltd., Higashiosaka-shi Osaka-fu (JP)
(72) Inventor: Tanaka, Yuzuru, Daito-shi, Osaka (JP)
(74) Representative: Ritter und Edler von Fischern, Bernhard, Dipl.-Ing.

(56) References cited:
- DE-A- 3 205 206
- GB-A- 2 059 055
- US-A- 4 154 000
- US-A- 4 625 423

## Description

The present invention relates to a level detector which is adapted to detect and indicate automatically whether a surface of an object to be tested is horizontal or inclined, in association with a tube containing a bubble in a liquid.

US-A-4 154 000 describes a level detector comprising a bubble-container tube containing a bubble in a liquid, the bubble-container tube being supported horizontally in a detector body, a transmitter adapted to emit light beams and arranged at one side relative to the tube in a traversing direction thereof, the emitted light beams being directed toward the bubble-container tube so as to cross the tube, a light receptor having a plurality of photosensitive elements adapted to react to the light beams and arranged at an opposite side relative to the tube so as to be irradiated with the light beams arriving across the bubble-container tube, a discriminating circuit adapted to detect inclination of the detector body according to electric outputs of reactional photosensitive elements irradiated with the light beams which arrive across the bubble-container tube without interference by the bubble, and at least one inclination indicator adapted to indicate the inclination of the detector body by detection at the discriminating circuit.

Various automatic level detectors of this kind have been proposed hitherto in the prior art. For example, one level detector is arranged so that electrodes are installed within a bubble-container tube charged with an electrolytic solution , wherein the movement of the bubble within the tube brings about a change in an electric output according to inclination of the surface to be tested. Another level detector is arranged so that a resistor is installed within a bubble-container tube charged with a conductive liquid while the resistor is exposed to the bubble, wherein the movement of the bubble brings about a change in resistance of the resistor to enable the detection of inclination of the surface to be tested (see the Unexamined Japanese Patent Application Publication No. S57- 166511). A further level detector is arranged so that a bubble-container tube charged with a magnetic fluid is surrounded externally by an electric member of a differential transformer, wherein the movement of the bubble brings about a change in an electric output according to inclination of the surface to be tested (see, merely as one example, the Unexamined Japanese Utility Model Application Publication No. S60 - 530074 ). A still further level detector is arranged so that a bubble-container tube charged with an opaque liquid is interposed between a light-emitting element and a photosensitive element, wherein light beams passing through the bubble within the tube cause a switching circuit to energize some indication lamps and an alarm buzzer according to inclination of the surface to be tested ( see the Unexamined Japanese Utility Model Application No. S 52 - 75456 ).

However, the above-mentioned liquids used within the tubes in the conventional level detectors are specialized and thus cause some problems. Particularly, there is a deficiency not only in the movability and unification of the bubble within the tube, but also in the stability of the liquids. The accuracy in measurement and the durability of the detectors are somewhat poor, in addition to an increased material cost due to the use of the specialized liquids. Further, in the case where the aforesaid electrodes or resistors are installed within the tube , there is an increase in production cost of the tube. Further, in the case where the differential transformer is arranged around the tube, the structure in itself of the detector gets complicated. Further, in the case where the light-emitting element and the photosensitive element are used, a bubble of a relatively large body capable of touching directly the inside wall of the tube is required for complete passage of the light beams through the tube to accurate measurement.

Therefore, an object of the present invention is to provide an automatic level detector which can accurately detect and indicate the levelness of the surface of an object to be tested, using a common level tube of the conventional eye observation type without requiring any specialized liquid or any electric resistor or electrodes.

Another object of the present invention is to provide an automatic level detector which is superior in operational reliability and durability and can be manufactured with a simplified structure and a reduced cost.

According to the invention, there is provided a level detector comprising:
a bubble-container tube containing a bubble in a liquid, the bubble-container tube being supported horizontally in a detector body, a transmitter adapted to emit light beams and arranged at one side relative to the tube in a traversing direction thereof, the emitted light beams being directed toward the bubble-container tube so as to cross the tube, a light receptor having a plurality of photosensitive elements adapted to react to the light beams and arranged at an opposite side relative to the tube so as to be irradiated with the light beams arriving across the bubble-container tube, a discriminating circuit adapted to detect inclination of the detector body according to electric outputs of reactional photosensitive elements irradiated with the light beams which arrive across the bubble-container tube without interference by the bubble, and at least one inclination indicator adapted to indicate the inclination of the detector body by detection at the discriminating circuit;
the level detector being characterized by comprising further an adjustment mechanism for adjusting the vertical position of the bubble-container tube relative to the detector body.

For a better understanding of the invention and to show how the same may be carried into effect, reference will now be made, by way of example, to the accompanying drawings, in which:
Fig. 1 is a perspective view of a first embodiment of a level detector according to the invention;
Fig. 2 is a transverse cross-section of the same embodiment;
Fig. 3 is a longitudinal cross-sectional view, showing the detector with a combined external levelness indicator of the same embodiment;
Fig. 4 is a plan view, partially in cross-section, of the main part of the same embodiment;
Fig. 5 is a longitudinal cross-section of the common level tube containing a bubble in a liquid, used in the same embodiment;
Fig. 6 is a schematic plan view, illustrating an arrangement of a detecting system in relation to the bubble-container tube in the same embodiment;
Fig. 7 is a schematic plan view, illustrating a modification of the photosensitive elements of Fig. 6;
Fig. 8 is a schematic plan view, illustrating a modification of the projector of Fig. 6;
Fig. 9 is a schematic plan view, illustrating another modification of the projector of Fig. 6;
Fig. 10 is a perspective view of a second embodiment of the invention;
Fig. 11 is a transverse cross-section of the second embodiment;
Fig. 12 is a longitudinal cross-sectional view, showing the level detector with a combined external indicator of the same embodiment; and
Fig. 13 is a plan view of a bubble-container level tube used in the second embodiment.

The level detector is partially based on and developed from a phenomenon that a transparent liquid such as alcohol or ether has a refractive index which remarkably differs from that of a gas such as air forming the bubble, but is nearly equal to that of the tube material of glass or transparent plastics. Where a plurality of photosensitive elements are disposed in a line at the back of a common level tube containing a bubble in a liquid, some light beams, travelling toward a bubble-container tube from a projector, are reflected or refracted greatly at the interface between the bubble and the liquid within the tube, so as to never hit one or more photosensitive elements present at the back of the bubble. Some light beams pass straight across the tube off the inside bubble, and then hit the other photosensitive elements existing in an area distant from the back of the bubble. Only the other photosensitive elements irradiated with light beams react and then generate electric outputs. However, when the tube is laid on a sloping surface of an object, the bubble moves from place to place within the tube, in which there are various combinations of the reactional photosensitive elements to generate electric outputs in response to the light beams. Therefore, the level detector described has a construction in which light receptors disposed along one lateral side of the tube are associated with a discriminating circuit designed to detect inclination from particular combinations of the reactional photosensitive elements irradiated with the light beams and then to energize a levelness indicator for giving a visual signal and/or an audio signal.

Such a construction adopted in the level detector described herein enables the inclination of a surface of an object to be detected and indicated automatically in an accurate manner, using a common level tube of the conventional eye observation type without requiring any specialized liquid or any resistor or electrodes. Further, such a construction is relatively uncomplicated and inexpensive, with superiority in operational reliability and durability.

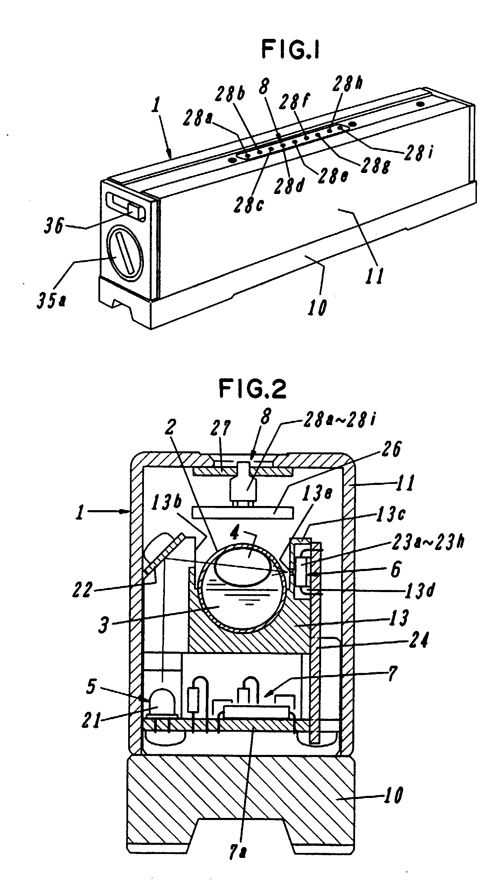

Figs. 1 to 6 show a first embodiment of a level detector according to the present invention. In Figs. 1 to 4, a body 1 of the level detector consists mainly of a base 10 and an elongated rectangular case 11, wherein there is accommodated a bubble-contained level tube 2 charged with a small body of bubble and a transparent liquid 3 such as alcohol or ether. Further, there are accommodated a projector 5 for emitting light beams to travel toward the bubble-contained tube 2; a light receptor 6 adapted to react to light beams passing through the tube 2; a discriminating circuit 7 for discriminating different outputs of the receptor; and an internal levelness indicator 8 for indicating the levelness of the detector body 1 to examiners. The numeral 9 denotes an external levelness indicator for indicating the levelness to examiners present far away from the detector body 1.

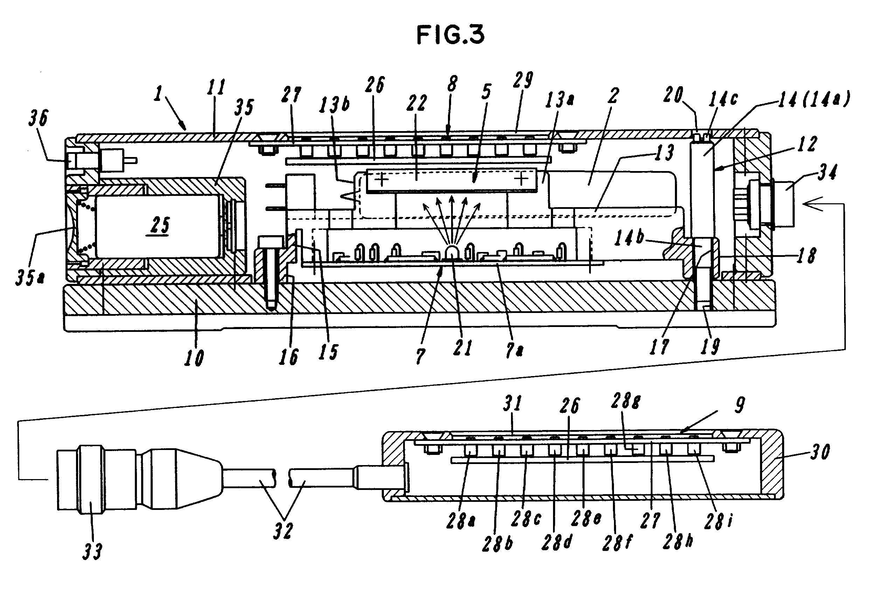

As shown in Figs.2 and 3, an adjustmental mechanism 12 is interposed between the bubble-contained tube 2 and the base 10 so as to sustain the former from the latter. The adjustmental mechanism 12 consists of a bed 13 for stabilizing the tube and a screw shaft 14 for adjusting the vertical location of the bed 13 relative to the base 10. The bed 13 has a concave portion formed longitudinally on the upper face for holding the tube 2 steadily. One end of the bed 13 is formed into an intervening spring-plate-like portion 15 and an attachment portion 16 secured to the base 16. An opposed end 18 of the bed 13 has a vertical penetration hole 17 for the screw shaft 14 and is put apart a little upwardly from an upper face of the base 10. The screw shaft 14 is formed into an upper smooth shank portion 14a, a lower thread portion 14b, and a slitted head 14c. The upper shank portion 14a is of a diameter greater than the lower thread portion 14b. The slitted head 14c serves as an operational portion controlled manually by examiners. The lower thread portion 14b is inserted into the vertical hole 17 and screwed into a female-threaded penetration 19 which is formed in the base 10. A stepped shoulder is formed in the longitudinal middle of the screw shaft 14 so as to regulate the horizontal orientation of the bed 13 by contact with an upper face of the bed end 18. The slitted head 14c is exposed to the outside of the detector in an opening 20 which is formed in a top of the case 11.

As shown in Figs. 2 and 3, the projector 5 is comprised of a light emitter 21 and a light reflector 22, which are disposed so that the light beams from the emitter 21 travels across the tube 2 from one lateral side to the other lateral side thereof. Particularly, the light emitter 21 is of a light-emitting diode or the like, and is disposed away downwardly and obliquely from the tube 2, i.e. on one side end of a first printed circuit board 7a for the discriminating circuit 7 disposed under the bed 13, with the emitter 21 being oriented upwardly. The light reflector 22 is of a plane mirror disposed nearly beside the tube 2 aslant so as to deflect the light beams emitted upwardly from the emitter toward the tube. The reflector 22 is sustained by a pair of attachments 13a, 13b supported from the side edge of the bed 13. The light reflector 22 is not limited to the above-mentioned plane mirror. Instead, a prism can be used.

As shown in Figs. 2 and 3, the light receptor 6 comprises a plurality of photosensitive elements 23a - 23h ( phototransistors, photodiode or the like ), which are arranged along the tube 2 longitudinally in an area to be irradiated with the light beams passing through the tube 2. Particularly, the photosensitive elements 23a - 23h are mounted in a line on a second printed circuit board 24 for themselves, and are put within a longitudinal recession 13d which is formed in an outside of an upward extension wall 13c projected upwardly from one lateral side portion of the bed 13. The second circuit board 24 for the photosensitive elements 23a - 23h is attached firmly to the lateral side face of the bed 13 with set screws. The upward extension wall 13c of the bed 13 has a plurality of light entrance apertures 13e ... formed in a line so as to allow the light beams passing through the tube 2 to enter. The light entrance apertures 13e ... in a line are arranged in proper intervals so as to face to the photosensitive elements 23a - 23h in a line which are set, as described in detail hereinafter, in proper locations.

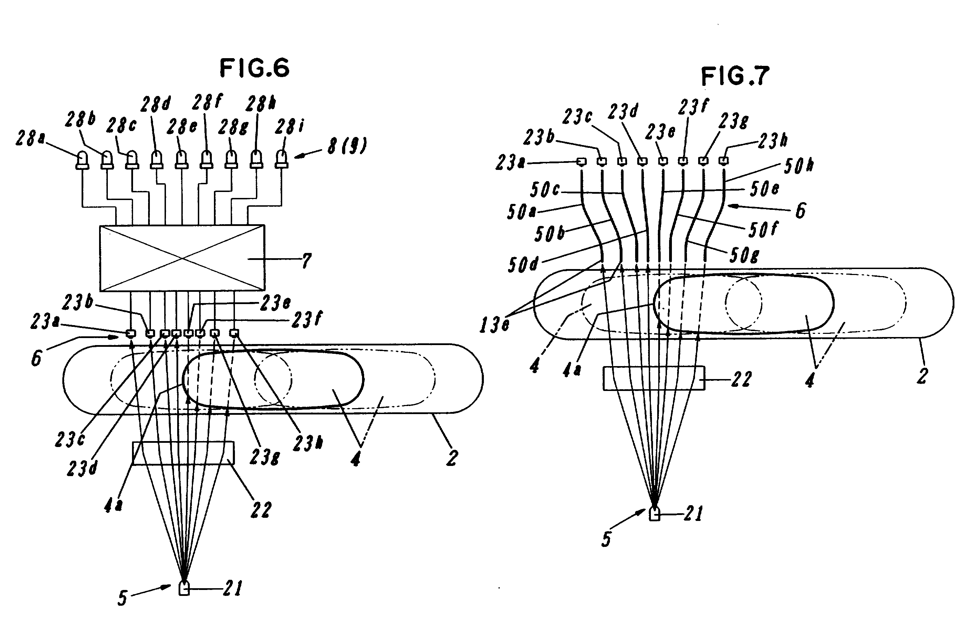

The discriminating circuit 7 is formed integrally with the first printed circuit board 7a which is disposed under the bed 13 and above the base 10. The discriminating circuit 7 is supplied with an electric power from a battery 25, and is adapted to discriminate various combinations of reactional photosensitive elements irradiated with the light beams passing straightforwardly through the tube off the bubble ( for example, a half of ones on the left side denoted by the numerals 23a - 23d in Fig. 6 ) from among all the photosensitive elements 23a - 23h , according to outputs generated in the reactional photosensitive elements . Consequently, it is possible to discriminate also the remaining non-reactional photosensitive elements ( for example, the right side half denoted by the numerals 23e - 23h ) present directly at the back of the bubble within the tube The discriminating circuit 7 is further adapted to detect the levelness of the detector body 1 from the discrimination of the particular combination of the reactional photosensitive elements and then energize both the internal and external indicators 8, 9 for indicating the levelness to the examiners. The first printed circuit board 7a for the discriminating circuit 7 is arranged at a right angle in relation to the upright second printed circuit board 24 for the photosensitive elements 23a - 23h by coupling one side edge of the former to a lower end of the latter, and both the circuits on the respective boards 7a, 24 are electrically interconnected to one another.

The internal and external levelness indicators 8, 9 are of the same structure, and each comprise a plurality of indication lamps 28a - 28i (light-emitting diodes, as one example ) mounted in a line on a third printed circuit board 26 for themselves, and an attachment plate 27 for attaching the third circuit board 26 to the respective cases 11, 30. The attachment plate 27 has holes to hold heads of the indication lamps 28a - 28i in a line. With respect to the internal levelness indicator, the attachment plate 27 is attached internally to the upper side part of the elongated rectangular case 11 while the indication lamps 28a - 28i held partially by the attachment plate 27 are exposed externally from an elongated opening 29 formed in the upper side part of the case. With respect to the external levelness indicator 9, the attachment plate 27 is attached internally to an upper side part of an elongated rectangular case 30 while the indication lamps are exposed externally from an elongated opening 31 formed in the upper side part of the box.

The indication lamps 28a - 28i of the internal indicator 8 are electrically connected directly to the discriminating circuit 7. On the other hand, the external indicator 9 is electrically connected indirectly to the discriminating circuit 7. Particularly, the external indicator 9 has an external cord 32 which includes wires associating with each of the indication lamps 28a - 28i. The cord 32 has of a connector 33 at one end, which is coupled detachably to a connector 34 mounted on one end of the case 11 in the detector body 1. If not necessary to examiners, the external levelness detector 8 can be removed from the detector body 1 by separating both the connectors 33, 34 coupled to one another.

The battery 25 is disposed replaceably, as shown in Fig.3, within a storing room 35 partitioned in the other end of the rectangular case 11 of the detector body 1, and supplies an electric power to the light emitter 21 and the indication lamps 28a - 28i of the internal and external levelness indicators 8, 9 in addition to the discriminating circuit 7. The storing room 35 is closed with a threaded lid 35a detachably from the outside. A power switch 36 for the electric power of the battery 25 is mounted on an edge of the end of the detector body 1.

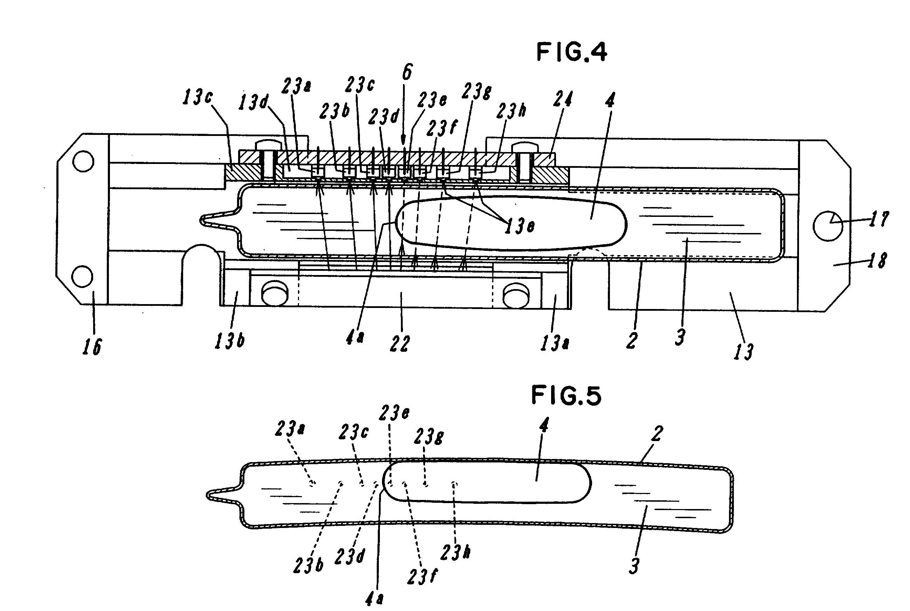

As shown in Fig. 5, the bubble-contained tube 2 is arcuated, similarly to a common simple level tube, such that a middle portion rises a little in relation to both end portions. Consequently, the bubble 4 floating within the tube 2 comes to stay in the middle position of the tube 2 in the longitudinal direction when the detector body 1 rests on a really horizontal plane. Based on the stay of the bubble 4 in the middle within the tube 2, the locations of the photosensitive elements 23a - 23h of the light receptor 6 are determined along the tube 2. As shown particularly in Figs. 4 and 6, a first half of eight photosensitive elements 23a - 23h, i.e. four elements 23a- 23d are arranged along the bubble-contained tube 2 on the left side relative to a transverse line tangent to an edge of the bubble 4 staying in the middle, while the remaining four photosensitive elements 23e - 23h are arranged along the tube 2 on the right side relative to the transverse tangent line. The four photosensitive elements on the right side and the left sides are ranged respectively within a half of the total length of the bubble 4. Therefore, the right side four photosensitive elements 23e - 23h face to a left side part of the bubble staying in the middle, but all of eight photosensitive elements 23a - 23h face to the whole of the bubble displaced leftwards, as shown by an imaginary line in Fig. 6, near to an edge limit within the tube 2 when the detector body 1 rests on a leftwards rising plane. When the detector body 1 rests on a rightwards rising plane, the bubble staying in the middle is displaced rightwards, as shown by an imaginary line in Fig. 6, near to an edge limit within the tube 2 so as to go away from the right side four photosensitive elements 23e - 23h.

The plane mirror of the reflector 22 has a length sufficient to cover the area of all photosensitive elements 23a - 23h in a line so that the light beams emitted from the projector 5 can travel toward all photosensitive elements crosswise.

In this manner, when the detector body 1 rests on a really horizontal plane, some of the light beams directed horizontally by the reflector 22 pass straightforwardly across the tube 2 off the inside bubble 4 and then hit the four photosensitive elements 23a - 23d on the left side as shown in Figs. 4 and 6, but some of the light beams are reflected or refracted at the interface between the bubble and the liquid within the tube so as to be prevented from passing straightforwardly through the tube, and thus never hit the four photosensitive elements 23e - 23h on the right side. Further, when the detector body 1 is slanted by degrees upwards from right to left, the bubble is displaced from the middle position to the left edge limit within the tube, and the left side part of the bubble comes gradually in front of the innermost one to all of the four left side reactional photosensitive elements 23a - 23d irradiated with the light beams. This leftward displacement of the bubble interrupts the transverse traveling courses of the light beams toward the four left side photosensitive elements 23a - 23d, and prevents the light beams from hitting one to all of the four left side photosensitive elements 23a - 23d in sequence from the innermost element 23d to the outermost element 23a.

When the detector is slanted by degrees reversely in a rightwards rising manner, the bubble is displaced from the central position to the right edge limit within the tube and go away gradually from one to all of the four right side photosensitive elements 23e - 23h at the back of the left side part of the bubble. Accordingly, the light beams directed toward the four right side photosensitive elements 23e - 23h travel straightforwardly without the interruption of the bubble and hit one to all of the four right side photosensitive elements 23e - 23h in sequence from the innermost element 23e to the outermost element 23h.

The following Table 1 shows every pattern of combinations of the reactional photosensitive elements irradiated with the light beams, from among eight photosensitive elements 23a - 23h in all, which vary with the inclination of the detector body 1 relative to the horizontal level. A combination of the four reactional photosensitive elements 23a - 23d on the left side irradiated with the light beams is represented by reaction pattern H, and indicates that the detector body 1 is put in a horizontal position. Next, a combination of the three reactional photosensitive elements 23a - 23c on the left side irradiated with the light beams is represented by reaction pattern L 1, and indicates that the detector body 1 is slanted upwards from right to left at the gradient of 0.1 to 100. Next, a combination of the two reactional photosensitive elements 23a, 23b on the left side irradiated with the light beams is represented by reaction pattern L 2, and indicates that the detector body 1 is slanted upwards to left at the gradient of 0.3 to 100. Next, a combination of only one reactional photosensitive element 23a outermost on the left side irradiated with the light beams is represented by L 3, and indicates that the detector body 1 is slanted upwards to left at the gradient of 0.6 to 100. Next, a combination free of any reactional photosensitive element 23a - 23d on the left side is represented by reaction pattern L 4, and indicates that the detector body 1 is slanted upwards to left at the gradient of 1.0 to 100 in which the bubble is displaced to the left edge limit within the tube. Similarly, reaction patterns R 1, R 2, R 3 and R 4 are established according to combinations of any reactional photosensitive element 23e - 23h on the right side irradiated with the light beams, and indicate that the detector body 1 is slanted upwards from left to right at the gradient of 0.1 to 100, 0.3 to 100, 0,6 to 100, and 1.0 to 100, respectively.

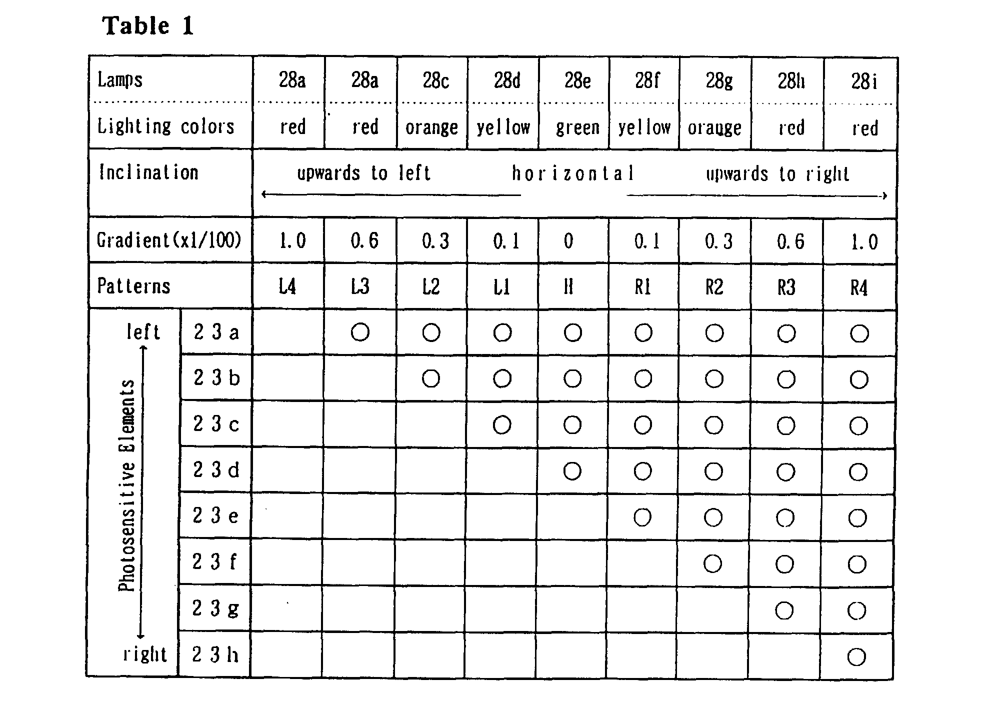

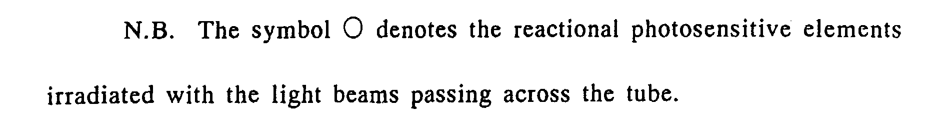

Based on the output of the reactional photosensitive elements irradiated with the light beams, the discriminating circuit 7 discriminates various combinations of the reactional photosensitive elements as shown by the above-described reaction patterns, and then energizes selectively the indication lamps 28a - 28i of the internal and external levelness indicators 8, 9. The indication lamps 28a - 28i are arranged to correspond to nine differences of levelness. The discriminating circuit 7 is designed to turn on one indication lamp 28e at the center according to the reaction pattern H deduced in relation to a horizontal level, and to turn on the indication lamps 28d, 28c, 28b, 28a on the left side according to the reaction patterns L 1, L 2, L 3 and L 4, respectively, deduced in relation to the leftwards rising inclinations and to turn on the indication lamps 28f, 28g, 28h, 28i on the right side according to the reaction patterns R 1, R 2, R 3 and R 4,respectively, deduced in relation to the rightwards rising inclinations. The indication lamps 28a - 28i each have different lighting colors as shown in the Table 1, i.e. the central lamp 28e is lit with " green " color, and, in order of increased inclination, the lamps 28d and 28f are lit with " yellow " color, the lamps 28c and 28f being lit with " red " color, and the lamps 28b, 28a, 28h, 28i being lit with "red " color, in which the lamps 28b, 28h can be differentiated from the lamps 28a, 28i with separate lighting colors according to the respective slanting angles.

The light receptor 6 is not restricted to the above-described construction, but may be modified in a manner shown in Fig. 7. In this modification, the photosensitive elements 23a - 23h are disposed remote from the light entrance apertures 13e in the upward extension wall 13c of the bed 13, but are associated with the light entrance apertures 13e by a plurality of interposing optical fibers 50a - 50h to conduct the light beams which have passed through the tube and entered the light entrance apertures.

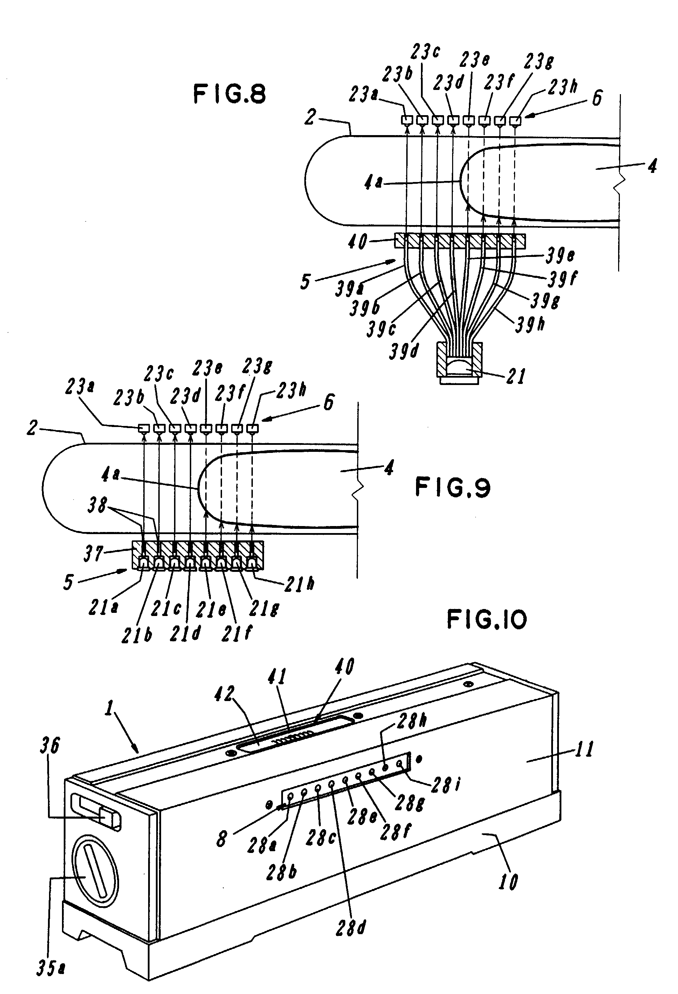

The projector 5 also is not restricted to the above- described construction, but may be modified in a manner shown in Figs. 8 and 9. In Fig. 8, a modification of the projector 5 comprises as many light emitters 21a - 21h ( for example, light emitting diodes ) as the photosensitive elements 23a - 23h of the light receptor 6, and a holder 37 which holds the light emitters 21a - 21h and is disposed in a position opposite to the photosensitive elements 23a - 23h with the tube 2 interposed therebetween. The holder 37 has passage holes 38 for controlling the light beams from the light emitters 21a - 21h to the courses towards the corresponding photosensitive elements 23a - 23h.

In Fig. 9, another modification of the projector comprises a light emitter 21, a plurality of optical fibers 39a - 39h arranged to distribute the light beams of the emitter 21 to points opposite to the photosensitive elements 23a - 23h, and a holder 40 for holding outlet ports of the optical fibers 39a - 39h.

Incidentally, the projector 5 is arranged, in the embodiment, to take the horizontal traveling course of the light beams toward the tube 2, but can be arranged to take the vertical traveling course of the light beams toward the tube 2.

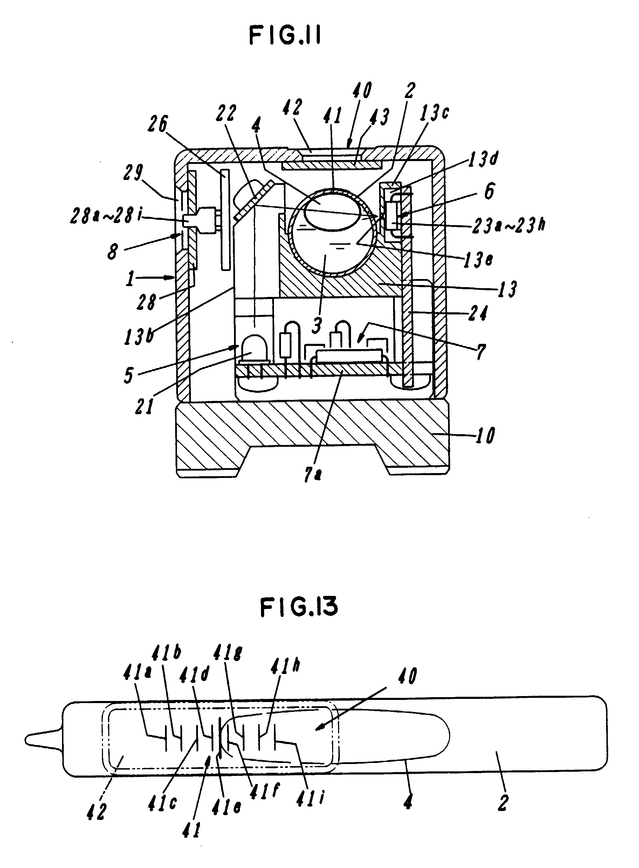

Figs.10 to 13 show a second embodiment of a level detector according to the invention, which is described in detail in respect of parts different from those of the first embodiment with description being omitted in respect to the same parts given by the corresponding numerals as in the first embodiment. In an elongated rectangular case 11 of a detector body 1, its upper side part is provided with a marked scale observation window 40 for knowing levelness of the detector body 1 by observing a relative position of the bubble within a bubble-contained tube 2.

The marked scale observation window 40 is comprised of a rectangular opening 42 formed longitudinally in the upper side part of the case 11, and a transparent protective plate 43 like a glass plate for covering the case 11 from the inside. A scale 41 is marked directly on an upper surface of the bubble-contained tube 2 in a manner different in that of a common level tube of the conventional eye observation type. As shown particularly in Fig. 13, the scale is marked with a reference line 41e of a horizontal level, four inclination indication lines 41a - 41d on the left side of the reference line, and four inclination lines 41f - 41i on the right side. The reference line 41e is put in a position on a vertical plane tangent to an edge of the bubble 4 staying within the tube 2 when the detector body 1 rests on a really horizontal plane. The inclination lines 41a - 41d and 41f - 41i on the left and right sides each are located according to the locations of the edge of the bubble displaced when the detector body 1 is slanted upwards from right to left, and from left to right at each of predetermined gradients. These gradients can be established to correspond to the gradients at which the indication lamps 28a -28i each are lit. The values of the gradients may be marked together with the corresponding indication lines. If the transparent protective plate 43 is arranged to be disposed nearer to the bubble-contained tube 2, it is allowed to mark the scale on the protective plate 42 itself.

In the second embodiment also, a discriminating circuit 7 is designed to detect the stepwise grades of inclination from reaction of the photosensitive elements 23a - 23h in a line positioned at proper intervals and to indicate the stepwise grades of inclination to examiners through the levelness indicator 9. However, in the case where the examiners want to know by sight a delicate degree of inclination or a direction of inclination, the examiners can know it by reading the relative position of the edge a of the bubble 4 from the marked scale 41 through the observation window 40.

There is a likelihood that the observation window 40 will cause unexpected results, --- namely,external natural light may enter the light entrance apertures 13e within the detector body 1 and then hit the photosensitive elements 23a - 23h of the light receptor 6 so as to bring about malfunction of the discriminating circuit 7. In order to overcome the problem, the light entrance apertures 13e should is formed so as to have a length enough to allow the entrance of the light beams passing through the tube 2 in a certain direction only, e.g. horizontally. Alternatively, for the light emitter 21 of the projector 5, use should be made of that of a type to emit infrared beams, whereas, for the photosensitive elements 23a - 23h of the light receptor 6, use should be made of those of a type to be sensitive to infrared beams, 50 that the photosensitive elements 23a - 23h can be prevented from reacting abnormally to the natural light entering from the observation window 40 .

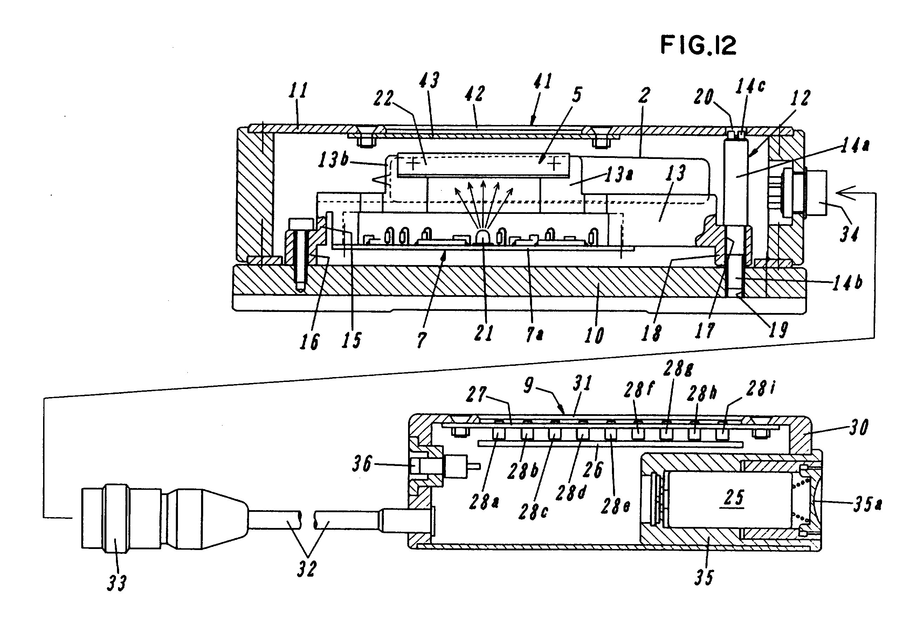

As seen in Fig. 12, in the second embodiment, no internal levelness indicator is arranged in the detector body 1, and an external levelness indicator 9 only is used. In addition, the external indicator 9 instead of the detector body 1 is provided with a battery 25 and a power switch 36 for switching on/off the supply of the electric power of the battery 25 to the projector 5, the receptor 6 and the discriminating circuit 7 on the detector body side by way of a wire cable 32. However, the power switch 36 can be omitted because a connector 34 on the detector body 1 and a connector 33 on the external indicator 9 function as a switch by mutual connection and disconnection.

In practical use of the level detector so constructed as described, the detector body 1 is first laid on a surface of an object to be tested, and then the power switch 36 is closed, whereby the light beams from the emitter 21 of the projector 5 finally results in the lighting of anyone of the indication lamps 28a - 28i of the internal and/or external levelness indicators 8, 9 according to the levelness of the surface of the object. The examiner can know the levelness of the object from the lighting and color of the indication lamps 28a - 28i. If the examiner is in a situation that he can know the levelness readily from the internal indicator 8 only, the external indicator 9 is allowed to be removed from the detector body 1. However, when the external indicator 9 is used in combination with the detector body 1, the external indicator 9 is set far away from the detector body 1 in a position and direction easy to see.

The adjustmental mechanism 12 is used for adjusting the vertical location of the tube 2 relative to the detector body 1 laid on the object. When the bubble-contained tube 2 is supported on the bed 13 out of position within the detector body 1, the indicator 8, 9 does not gives the signal of a horizontal level through the corresponding lamp in relation to a really horizontal surface of the object. In such a case, the bed 13 with the tube 2 can be adjusted into a position parallel to the base 10 by turning the screw shaft 14 of which the shoulder in the middle regulates the vertical location of one end 18 of the bed 13. Particularly, the turning of the screw shaft 14 in a deeply entering direction pushes the one end 18 of the bed 13 downwardly relative to the attachment portion 16 of the other end of the bed 13. On the other hand, the turning of the screw shaft 14 in an unscrewing direction allows the one end 18 of the bed 13 to restore in an original upper position by the action of the intervening portion 15 of the other end of the bed 13.

In the above-described embodiments, the levelness indicators 8, 9 are adapted to indicate the levelness by the lighting and color of the indication lamps 28a - 28i, but can be adapted to indicate the levelness to examiners by sound only or in combination with the lighting. The level detector of the invention can be applied to verticality of a vertical plane by use of a supplemental member shaped like L forming a right angle. Further, two level detectors can be used together for two directions crossing at a right angle on a horizontal plane so as to detect the levelness of the different directions.

According to the level detector of the present invention, the levelness of a surface of the object to be tested can be detected accurately and indicated clearly to the examiners, using a common level tube of the conventional eye observation type. The level detector of the invention can be manufactured in a relative low cost, and is superior in reliability and durability with a relatively uncomplicated construction.

In the level detector of the invention, where the photosensitive elements 23a - 23h of the light receptor 6 are arranged in a line along the bubble-contained tube 2 in an area to be irradiated with light beams coming straightforwardly across the bubble-contained tube 2 , any light beams conducting means is never required for conducting the light beams from the light entrance apertures 13e to the photosensitive elements 23a - 23h. Thus, the whole construction can be simplified with small size, so that the cost can be reduced.

In the level detector of the invention, where the photosensitive elements 23a - 23h of the light receptor 6 are disposed away from the bubble-contained tube 2 , and a plurality of optical fibers 50a - 50h are associated with an area to be irradiated with light beams coming straightforwardly across the bubble-contained tube 2 so as to conduct the light beams to the photosensitive elements 23a - 23h, the intervals of the light entrance apertures 13e can be shortened without being restricted by the width of the photosensitive elements 23a - 23h. Thus, the degree of measurement can be enhanced by a greater number of the apertures 13e and photosensitive elements.

In the level detector of the invention, where the projector 5 comprises a light emitter 21 , and a light reflector 22 for changing a traveling course of light beams emitted from the emitter 21 toward the bubble-contained tube 2 crosswise , the number of necessary parts can be reduced to render the structure simpler and inexpensive. Further, layout of the parts in the whole is easy to design.

In the level detector of the invention, where the projector 5 comprises a plurality of light emitters 21a - 21h arranged to be opposed to each of the photosensitive elements 23a - 23h of the light receptor 6 with the tube 2 interposed therebetween, the degree of measurement can be enhanced by independent travelling courses of the light beams.

In the level detector of the invention, where the projector 5 comprises a light emitter 21 , a plurality of optical fibers 39a - 39h arranged to distribute the light beams of the light emitter 21 to positions opposite to each of the photosensitive elements 23a - 23 h , the degree of measurement can be enhanced by independent travelling courses of the light beams.

In the level detector of the invention, where the levelness indicator 8, 9 comprises a plurality of indication lamps 28a - 28i corresponding to a plurality of predetermined grades of gradients, and the discriminating circuit 6 energizes selectively the indications lamps 28a - 28i according to inclination of the detector body 1, the levelness can be known readily and surely by identifying the lamps lit.

In the level detector of the invention, where the levelness indicator 8 is arranged in the detector body 1, the levelness can be known readily from the detector body by itself.

In the level detector of the invention, where the levelness indicator 9 is arranged in an external case 30 , and is electrically connected to the detector body 1 side by a wire cord 32, the efficiency of measurement can be enhanced because the levelness indicator can be set at any desired position, height or direction irrelevant to the position of the detector body.

In the level detector of the invention, a vertical position of the bubble-contained tube 2 relatively in the detector body 1 can be adjusted by the adjustmental mechanism 12 . Thus, assembling works can be performed easily when manufacturing the level detectors.

In the level detector of the invention, where the adjustmental mechanism 12 comprises a bed 13 for stabilizing the bubble-contained tube 2 and a screw shaft 14 , wherein one end of the bed 13 has a spring-plate-like portion 15 and an attachment portion 16 secured to the detector body 1 whereas other end of the body 13 is put in a free condition and is depressed displaceably by the screw shaft 14 , there is no need for a spring coil adapted to bias the end of the bed 13 or a mechanism adapted to raise or lower the end of the bed 13. Thus, the number of parts can be reduced with a simplified structure.

In the level detector of the invention, where the detector body 1 is provided with a marked scale observation window 40 for knowing levelness of the detector body 1 by observing a relative position of the bubble 4 directly within the bubble-contained tube 2, the levelness can be measured analogously. Thus, it is possible to compare a real levelness of the object with the indication of the indicator 8, 9. Even when the indicator 8, 9 indicates that the object is horizontal, the examiners can confirm that the object is really horizontal or slanted upwards to right or left. The observation window 40 is convenient to those who are familiar with classic instruments of an eye observation type, and is superior in versatility.

In the level detector of the invention, where a battery 25 is disposed in the external case 30 , the size and weight of the detector body 1 can be reduced with a feasible handling.

In the level detector of the invention, where the detector body 1 and the cord 32 each have connectors 33, 34 adapted to be detachably coupled to one another and thereby close a power supply circuit including the battery 25, a switch is never required for power source and operational efficiency can be enhanced.

In the level detector of the invention, where the projector 5 is of a type to emit infrared beams, and the photosensitive elements 23a - 23h of the light receptor 6 are of a type to be sensitive to the infrared beams, it is possible to prevent unexpected operation due to natural light and thereby enhance the accuracy of measurement.

## Claims

1. A level detector comprising:
a bubble-container tube (2) containing a bubble (4) in a liquid (3), the bubble-container tube (2) being supported horizontally in a detector body (1), a transmitter (5) adapted to emit light beams and arranged at one side relative to the tube (2) in a traversing direction thereof, the emitted light beams being directed toward the bubble-container tube (2) so as to cross the tube (2), a light receptor (6) having a plurality of photosensitive elements (23a-23h) adapted to react to the light beams and arranged at an opposite side relative to the tube (2) so as to be irradiated with the light beams arriving across the bubble-container tube (2), a discriminating circuit (7) adapted to detect inclination of the detector body (1) according to electric outputs of reactional photosensitive elements irradiated with the light beams which arrive across the bubble-container tube (2) without interference by the bubble (4), and at least one inclination indicator (8,9) adapted to indicate the inclination of the detector body (1) by detection at the discriminating circuit (7);
the level detector being characterized by comprising further an adjustment mechanism (12) for adjusting the vertical position of the bubble-container tube (2) relative to the detector body (1).

2. A level detector as defined in Claim 1, wherein the photosensitive elements (23a-23h) of the light receptor (6) are arranged in a line along the bubble-container tube (2) in an area to be irradiated with light beams arriving across the bubble-container tube (2).

3. A level detector as defined in Claim 2, wherein the photosensitive elements (23a-23h) of the light receptor (6) are disposed away from the bubble-container tube (2), and a plurality of optical fibers (50a-50h) are associated with an area to be irradiated with light beams arriving across the bubble-container tube (2) so as to conduct the light beams to the photosensitive elements (23a-23h).

4. A level detector as defined in Claim 1, wherein the transmitter (5) comprises a light emitter (21), and a light reflector (22) for changing the path of light beams emitted from the emitter (21) toward the bubble-container tube (2) so that the light beams pass across the tube (2).

5. A level detector as defined in Claim 1, wherein the transmitter (5) comprises a plurality of light emitters (21a-21h) arranged to oppose respective photosensitive elements (23a-23h) of the light receptor (6) with the tube (2) interposed therebetween.

6. A level detector as defined in Claim 1, wherein the transmitter (5) comprises a light emitter (21) and a plurality of optical fibers (39a-39h) arranged to distribute the light beams of the light emitter (21) to positions opposite to each of the photosensitive elements (23a-23h).

7. A level detector as defined in any one of Claims 1 to 6, wherein the level indicator (8,9) comprises a plurality of indication lamps (28a-28i) corresponding to a plurality of predetermined gradients, and the discriminating circuit (6) energizes selectively the indication lamps (28a-28i) according to inclination of the detector body (1).

8. A level detector as defined in Claim 7, wherein the level indicator (8) is arranged in the detector body (1).

9. A level detector as defined in Claim 7, wherein the level indicator (9) is arranged in an external case (30), and is electrically connected to the detector body (1) side by a wire cord (32).

10. A level detector as defined in Claim 1, wherein the adjustmental mechanism (12) comprises a bed (13) for stabilizing the bubble-container tube (2) and a screw shaft (14), wherein one end of the bed (13) has a spring-plate-like portion (15) and an attachment portion (16) secured to the detector body (1) whereas other end of the body (13) is put in a free condition and is depressed displaceably by the screw shaft (14).

11. A level detector as defined in Claim 7, wherein the detector body (1) is provided with a marked scale observation window (40) for determining the inclination of the detector body (1) by observing the relative position of the bubble (4) directly within the bubble-container tube (2).

12. A level detector as defined in Claim 9, wherein a battery (25) is disposed in the external case (30).

13. A level detector as defined in Claim 9 or 12, wherein the detector body (1) and the cord (32) each have connectors (33,34) adapted to be detachably coupled to one another and thereby close a power supply circuit including the battery (25).

14. A level detector as defined in Claim 1, wherein the transmitter (5) is of a type to emit infrared beams, and the photosensitive elements (23a-23h) of the light receptor (6) are of a type to be sensitive to the infrared beams.

## Patentansprüche

1. Ein Niveaudetektor, umfassend:
eine Blasencontainerröhre (2), die eine Blase (4) in einer Flüssigkeit (3) enthält, wobei die Blasencontainerröhre (2) horizontal von einen Detektorkörper (1) gehalten wird, einen zur Aussendung von Lichtstrahlen angepaßten Transmitter (5), der an einer Seite relativ zur Röhre (2) in einer Querrichtung dazu angeordnet ist, wobei die ausgesendeten Lichtstrahlen in Richtung der Blasencontainerröhre (2) gerichtet sind, so daß sie die Röhre (2) kreuzen, einen Lichtrezeptor (6) mit einer Vielzahl von fotoempfindlichen Elementen (23a - 23h), der angepaßt ist, mit den Lichtstrahlen zu reagieren, und der an einer gegenüberliegenden Seite relativ zur Röhre (2) angeordnet ist, so daß er durch die durch die Blasencontainerröhre (2) ankommenden Lichtstrahlen beleuchtet wird, eine Unterscheidungsschaltung (7), dazu angepaßt, eine Neigung des Detektorkörpers (1) entsprechend elektrischen Ausgaben von fotoempfindlichen Reaktionselementen zu erfassen, die mit den Lichtstrahlen beleuchtet werden, die durch die Blasencontainerröhre (2) ankommen, ohne mit der Blase (4) zu interferieren, und zumindest einen Neigungsindikator (8, 9), dazu angepaßt, die Neigung des Detektorkörpers (1) durch eine Erfassung an der Unterscheidungsschaltung (7) anzuzeigen;
wobei der Niveaudetektor dadurch gekennzeichnet ist, daß er weiter einen Einstellmechanismus (12) umfaßt, um die vertikale Position der Blasencontainerröhre (2) relativ zum Detektorkörper (1) einzustellen.

2. Ein Niveaudetektor nach Anspruch 1, dadurch gekennzeichnet, daß die fotosensitiven Elemente (23a - 23h) des Lichtempfängers (6) in einer Linie entlang der Blasencontainerröhre (2) in einem Bereich angeordnet sind, der mit den durch die Blasencontainerröhre (2) ankommenden Lichtstrahlen zu beleuchten ist.

3. Ein Niveaudetektor nach Anspruch 2, dadurch gekennzeichnet, daß die fotoempfindlichen Elemente (23a - 23h) des Lichtempfängers (6) entfernt von der Blasencontainerröhre (2) angeordnet sind, und eine Vielzahl von optischen Fasern (50a - 50h) einem Bereich zugeordnet ist, der mit durch die Blasencontainerröhre (2) ankommenden Lichtstrahlen zu beleuchten ist, so daß sie die Lichtstrahlen zu den fotoempfindlichen Elementen (23a - 23h) leiten.

4. Ein Niveaudetektor nach Anspruch 1, dadurch gekennzeichnet, daß der Transmitteer (5) einen Lichtemitter (21) umfaßt, und einen Lichtreflektor (22), um den Pfad von von dem Emitter (21) in Richtung der Blasencontainerröhre (2) ausgesendeten Lichtstrahlen zu ändern, so daß die Lichtstrahlen durch die Röhre (2) hindurchtreten.

5. Ein Niveaudetektor nach Anspruch 1, dadurch gekennzeichnet, daß der Transmitter (5) eine Vielzahl von Lichtemittern (21a - 21h) umfaßt, die angeordnet sind, um jeweiligen fotoempfindlichen Elementen (23a - 23h) des Lichtempfängers (6) gegenüberzuliegen, wobei Röhre (2) dazwischen angeordnet ist.

6. Ein Niveaudetektor nach Anspruch 1, dadurch gekennzeichnet, daß der Transmitter (5) einen Lichtemitter (21) und eine Vielzahl von optischen Fasern (39a - 39h) umfaßt, die angeordnet sind, um die Lichtstrahlen von dem Lichtemitter (21) zu Positionen gegenüberliegend zu jedem der fotoempfindlichen Elemente (23a - 23h) zu verteilen.

7. Ein Niveaudetektor nach einem der Ansprüche 1 bis 6, dadurch gekennzeichnet, daß der Niveauindikator (8, 9) eine Vielzahl von Anzeigelampen (28a - 28i) in Entsprechung zu einer Vielzahl von vorbestimmten Gradienten umfaßt, und die Unterscheidungsschaltung (6) selektiv die Anzeigelampen (28a - 28i) in Übereinstimmung mit einer Neigung des Detektorkörpers (1) anschaltet.

8. Ein Niveaudetektor nach Anspruch 7, dadurch gekennzeichnet, daß der Niveauindikator (8) im Detektorkörper (1) angeordnet ist.

9. Ein Niveaudetektor nach Anspruch 7, dadurch gekennzeichnet, daß der Niveaudetektor (9) in einem externen Gehäuse (30) angeordnet ist, und elektrisch mit einer Seite des Detektorkörpers (1) mittels einer Leitung (32) verbunden ist.

10. Ein Niveaudetektor nach Anspruch 1, dadurch gekennzeichnet, daß der Einstellmechanismus (12) ein Bett (13) umfaßt, um die Blasencontainerröhre (2) zu stabilisieren, und einen Schraubenschaft (14), wobei ein Ende des Bettes (13) einen federplattenähnlichen Abschnitt (15) und einen Befestigungsabschnitt (16) aufweist, der mit dem Detektorkörper (1) verbunden ist, wohingegen das andere Ende des Körpers (13) in einem freien Zustand angeordnet ist und beweglich durch den Schraubenschaft (14) herabgedrückt wird.

11. Ein Niveaudetektor nach Anspruch 7, dadurch gekennzeichnet, daß der Detektorkörper (1) mit einem Skalenmarkierungsbeobachtungsfenster (40) ausgerüstet ist, um die Neigung des Detektorkörpers (1) zu bestimmen, indem die relative Position der Blase (4) direkt innerhalb der Blasencontainerröhre (2) beobachtet wird.

12. Ein Niveaudetektor nach Anspruch 9, dadurch gekennzeichnet, daß eine Batterie (25) in dem externen Gehäuse (30) angeordnet ist.

13. Ein Niveaudetektor nach Anspruch 9 oder 12, dadurch gekennzeichnet, daß der Detektorkörper (1) und die Leitung (32) jeweils Verbinder (33, 34) aufweisen, die lösbar miteinander gekoppelt werden können und dadurch einen Energieversorgungskreis einschließlich der Batterie (25) schließen.

14. Ein Niveaudetektor nach Anspruch 1, dadurch gekennzeichnet, daß der Transmitter (5) von einem Infrarotstrahlen aussendenden Typ ist, und die fotoempfindlichen Elemente (23a - 23h) des Lichtrezeptors (6) von einem bezüglich der Infrarotstrahlen empfindlichen Typ sind.

## Revendications

1. Détecteur de niveau comprenant :
un tube conteneur de bulle (2) contenant une bulle (4) dans un liquide (3), le tube conteneur de bulle (2) étant supporté horizontalement dans un corps de détecteur (1), un émetteur (5) adapté pour émettre des faisceaux de lumière et disposé d'un côté par rapport au tube (2) dans une direction transversale de celui-ci, les faisceaux de lumière émis étant dirigés vers le tube de conteneur de bulle (2) de façon à croiser le tube (2), un récepteur de lumière (6) comportant une pluralité d'éléments photosensibles (23a à 23h) adaptés pour réagir aux faisceaux de lumière et agencés sur un côté opposé par rapport au tube (2) de façon à être irradiés par les faisceaux de lumière arrivant à travers le tube conteneur de bulle (2), un circuit de discrimination (7) adapté pour détecter l'inclinaison du corps de détecteur (1) en fonction de sorties électriques d'éléments photosensibles réactionnels irradiés par les faisceaux de lumière qui arrivent à travers le tube conteneur de bulle (2) sans interférence de la bulle (4), et au moins un indicateur d'inclinaison (8, 9) adapté pour indiquer l'inclinaison du corps de détecteur (1) par une détection au niveau du circuit de discrimination (7) ;
le détecteur de niveau étant caractérisé par le fait qu'il comprend de plus un mécanisme d'ajustage (12) pour ajuster la position verticale du tube conteneur de bulle (2) par rapport au corps de détecteur (1).

2. Détecteur de nivéau selon la revendication 1, dans lequel les éléments photosensibles (23a à 23h) du récepteur de lumière (6) sont agencés dans une ligne le long du tube conteneur de bulle (2) dans une zone devant être irradiée par des faisceaux de lumière arrivant à travers le tube conteneur de bulle (2).

3. Détecteur de niveau selon la revendication 2, dans lequel les éléments photosensibles (23a à 23h) du récepteur de lumière (6) sont disposés loin du tube conteneur de bulle (2), et une pluralité de fibres optiques (50a à 50h) sont associées à une zone devant être irradiée par des faisceaux de lumière arrivant à travers le tube conteneur de bulle (2) de façon à conduire les faisceaux de lumière vers les éléments photosensibles (23a à 23h).

4. Détecteur de niveau selon la revendication 1, dans lequel l'émetteur (5) comprend un émetteur de lumière (21), et un réflecteur de lumière (22) pour changer le trajet de faisceaux de lumière émis à partir de l'émetteur (21) en direction du tube conteneur de bulle (2), de telle sorte que les faisceaux de lumière traversent le tube (2).

5. Détecteur de niveau selon la revendication 1, dans lequel l'émetteur (5) comprend une pluralité d'émetteurs de lumière (21a à 21h) agencés de façon à être opposés à des éléments photosensibles respectifs (23a à 23h) du récepteur de lumière (6), avec le tube (2) interposé entre eux.

6. Détecteur de niveau selon la revendication 1, dans lequel l'émetteur (5) comprend un émetteur de lumière (21) et une pluralité de fibres optiques (39a à 39h) agencées de façon à distribuer les faisceaux de lumière de l'émetteur de lumière (21) vers des positions opposées à chacun des éléments photosensibles (23a à 23h).

7. Détecteur de niveau selon l'une quelconque des revendications 1 à 6, dans lequel l'indicateur de niveau (8, 9) comprend une pluralité de voyants indicateurs (28a à 28i) correspondant à une pluralité de gradients prédéterminés, et le circuit de discrimination (6) alimente sélectivement les voyants indicateurs (28a à 28i) en fonction de l'inclinaison du corps de détecteur (1).

8. Détecteur de niveau selon la revendication 7, dans lequel l'indicateur de niveau (8) est agencé dans le corps de détecteur (1).

9. Détecteur de niveau selon la revendication 7, dans lequel l'indicateur de niveau (9) est disposé dans une enceinte externe (30), et est électriquement connecté au côté du corps de détecteur (1) par un cordon de raccordement (32).

10. Détecteur de niveau selon la revendication 1, dans lequel le mécanisme d'ajustage (12) comprend un lit (13) pour stabiliser le tube conteneur de bulle (2) et un arbre fileté (14), dans lequel une extrémité du lit (13) comporte une partie analogue à une lame de ressort (15) et une partie de fixation (16) fixée au corps de détecteur (1), tandis qu'une autre extrémité du corps (13) est mise dans un état libre et est enfoncée de façon à pouvoir être déplacée par l'arbre fileté (14).

11. Détecteur de niveau selon la revendication 7, dans lequel le corps de détecteur (1) comporte une fenêtre d'observation d'échelle marquée (40) pour déterminer l'inclinaison du corps de détecteur (1) en observant la position relative de la bulle (4) directement à l'intérieur du tube conteneur de bulle (2).

12. Détecteur de niveau selon la revendication 9, dans lequel une pile ou batterie (25) est disposée dans l'enceinte externe (30).

13. Détecteur de niveau selon la revendication 9 ou 12, dans lequel le corps de détecteur (1) et le cordon (32) comportent chacun des connecteurs (33, 34) adaptés pour être couplés de façon détachable l'un à l'autre et pour fermer ainsi un circuit d'alimentation comprenant la pile ou batterie (25).

14. Détecteur de niveau selon la revendication 1, dans lequel l'émetteur (5) est d'un type émettant des faisceaux infrarouges, et les éléments photosensibles (23a à 23h) du récepteur de lumière (6) sont d'un type devant être sensible aux faisceaux infrarouges.
